(19) Europäisches Patentamt
European Patent Office
Office européen des brevets

(11) **EP 1 733 486 B1**

(12) **EUROPEAN PATENT SPECIFICATION**

(45) Date of publication and mention
of the grant of the patent:
**18.02.2015 Bulletin 2015/08**

(51) Int Cl.:
***H04B 7/04*** *(2006.01)*   ***H04B 7/06*** *(2006.01)*

(21) Application number: **05728334.3**

(86) International application number:
**PCT/US2005/008738**

(22) Date of filing: **15.03.2005**

(87) International publication number:
**WO 2005/104399 (03.11.2005 Gazette 2005/44)**

(54) **SPATIAL PROCESSING WITH STEERING MATRICES FOR PSEUDO- RANDOM TRANSMIT STEERING IN A MULTI-ANTENNA COMMUNICATION SYSTEM**

RÀUMLICHE VERARBEITUNG MIT STEUERUNGSMATRIX FÜR PSEUDOZUFALLSSENDESTEUERUNG IN EINEM MEHRANTENNEN-KOMMUNIKATIONSSYSTEM

TRAITEMENT SPATIAL A MATRICES D'ORIENTATION POUR L'ORIENTATION DE TRANSMISSION PSEUDO-ALEATOIRE DANS UN SYSTEME DE COMMUNICATION A ANTENNES MULTIPLES

(84) Designated Contracting States:
**AT BE BG CH CY CZ DE DK EE ES FI FR GB GR HU IE IS IT LI LT LU MC NL PL PT RO SE SI SK TR**

(30) Priority: **09.04.2004  US 821390**

(43) Date of publication of application:
**20.12.2006 Bulletin 2006/51**

(60) Divisional application:
**10176862.0 / 2 256 951**

(73) Proprietor: **Qualcomm, Incorporated**
**San Diego, CA 92121 (US)**

(72) Inventors:
• **WALLACE, Mark, S.**
**Bedford, Massachusetts 01730 (US)**
• **WALTON, Jay, Rodney**
**Carlisle, Massachusetts 01741 (US)**
• **HOWARD, Steven, J.**
**Ashland, Massachusetts 01721 (US)**

(74) Representative: **Heselberger, Johannes et al**
**Bardehle Pagenberg Partnerschaft mbB**
**Patentanwälte, Rechtsanwälte**
**Prinzregentenplatz 7**
**81675 München (DE)**

(56) References cited:
**US-A1- 2002 172 264    US-A1- 2003 016 637**
**US-B1- 6 198 775**

• **AGUSTIN A ET AL: "LDC construction with a defined structure [MIMO linear dispersive codes]" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 433-437Vol1, XP010700754 ISBN: 0-7803-7954-3**

**Description**

**BACKGROUND**

**I. Field**

The present invention relates generally to data communication, and more specifically to techniques for performing spatial processing for data transmission in a multi-antenna communication system.

**II. Background**

A multi-antenna communication system employs multiple transmit antennas and one or multiple receive antennas for data transmission. The multi-antenna system may thus be a multiple-input multiple-output (MIMO) system or a multiple-input single-output (MISO) system. A MIMO system employs multiple ($N_T$) transmit antennas at a transmitting entity and multiple ($N_R$) receive antennas at a receiving entity for data transmission, and is denoted as an $N_R \times N_T$ system. A MIMO channel formed by the $N_T$ transmit antennas and the $N_R$ receive antennas may be decomposed into $N_S$ spatial channels, where $N_S \leq \min \{N_T, N_R\}$. The $N_S$ spatial channels may be used to transmit data in a manner to achieve greater reliability and/or higher overall throughput. A MISO system employs multiple ($N_T$) transmit antennas and a single receive antenna for data transmission. A MISO channel formed by the $N_T$ transmit antennas and the single receive antenna is composed of a single spatial channel.

Each spatial channel may experience various deleterious channel conditions such as, e.g., fading, multipath, and interference effects. The $N_S$ spatial channels of a MIMO channel may also experience different channel conditions and may achieve different signal-to-noise-and-interference ratios (SNRs). The SNR of a spatial channel determines its transmission capacity, which is typically quantified by a particular data rate that may be reliably transmitted on the spatial channel. For a time variant wireless channel, the channel condition changes over time and the SNR of each spatial channel also changes over time.

To maximize throughput, the multi-antenna system may utilize some form of feedback whereby the receiving entity evaluates the spatial channel(s) and provides feedback information indicating the channel condition or the transmission capacity of each spatial channel. The transmitting entity may then adjust the data transmission on each spatial channel based on the feedback information. However, this feedback information may not be available for various reasons. For example, the multi-antenna system may not support feedback transmission from the receiving entity, or the wireless channel may change more rapidly than the rate at which the receiving entity can estimate the wireless channel and/or send back the feedback information. In any case, if the transmitting entity does not know the channel condition, then it may need to transmit data at a low rate so that the data transmission can be reliably decoded by the receiving entity even with the worst-case channel condition. The performance of such a system would be dictated by the expected worst-case channel condition, which is highly undesirable.

US2003/0016637 A refers to time interval based channel estimation with transmit diversity confronted with the difficulty of finding suitable training sequences with the requisite correlation qualities for a transmit diversity communication system.

To improve performance when feedback information is not available, the transmitting entity may perform spatial processing such that the data transmission does not observe the worst-case channel condition for an extended period of time, as described below. A higher rate may then be used for the data transmission. However, this spatial processing represents additional complexity for the transmitting entity and possibly the receiving entity.

There is therefore a need in the art for techniques to perform spatial processing, with minimal complexity, to improve the performance of data transmission in a multi-antenna communication system.

**SUMMARY**

Techniques for generating and using steering matrices for pseudo-random transmit steering (PRTS) are described herein. PRTS refers to spatial processing performed by a transmitting entity with steering matrices so that a data transmission observes an ensemble of "effective" channels. These effective channels are formed by the actual MIMO or MISO channel used for data transmission and the steering matrices used for PRTS. With PRTS, the data transmission does not observe a single bad channel realization for an extended period of time, and performance is not dictated by the worst-case channel condition.

The steering matrices may be generated such that the computation for PRTS is simplified. A set of steering matrices may be generated by first selecting a base matrix, which may be a Walsh matrix, a Fourier matrix, or some other unitary matrix having orthogonal columns. Different combinations of scalars are then selected, with each combination including at least one scalar for at least one row of the base matrix, one scalar per row. Each scalar may be a real or complex value. Different steering matrices are generated by multiplying the base matrix with each of the different combinations of scalars, as described below. The different steering matrices are thus different permutations of the base matrix and retain certain desirable (e.g., unitary) characteristics of the base matrix. By selecting a suitable base matrix (e.g., a Walsh matrix) and suitable scalars (e.g., +1, -1, +$j$, and -$j$, where $j = \sqrt{-1}$), the elements of the steering matrices belong in a set composed of {+1, -1, +$j$, -$j$}. In this case, the multiplication of a data symbol with an element of a steering matrix may be achieved with simple bit manipulations, as described below.

A set of steering vectors used for MISO transmission may be formed with the columns of the steering matrices. Each steering vector may also be viewed as a degenerated steering matrix containing just one column. Various aspects and embodiments of the invention are described in further detail below.

## BRIEF DESCRIPTION OF THE DRAWINGS

FIG. 1 shows a multi-antenna system with an access point and user terminals;
FIG. 2 shows a process to generate steering matrices and steering vectors used for pseudo-random transmit steering; and
FIG. 3 shows a block diagram of a multi-antenna transmitting entity, a single-antenna receiving entity, and a multi-antenna receiving entity.

## DETAILED DESCRIPTION

The word "exemplary" is used herein to mean "serving as an example, instance, or illustration." Any embodiment described herein as "exemplary" is not necessarily to be construed as preferred or advantageous over other embodiments.

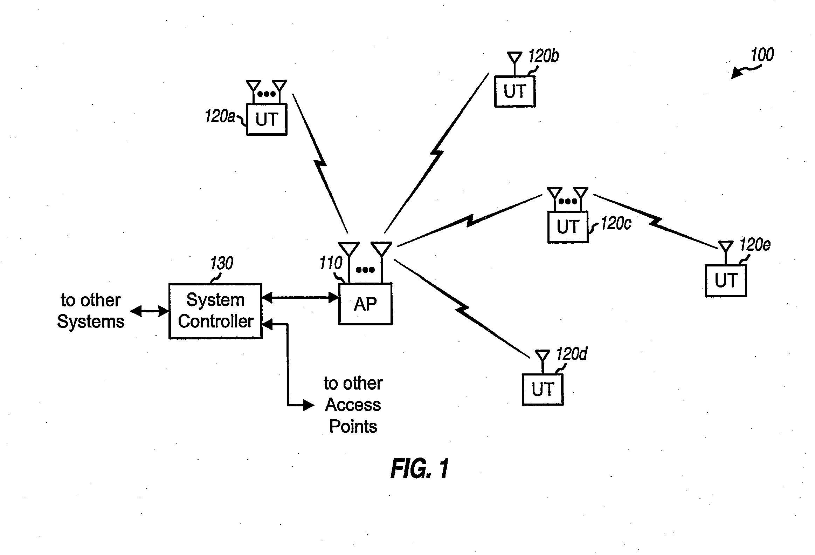

**FIG. 1** shows a multi-antenna system 100 with an access point (AP) 110 and user terminals (UTs) 120. An access point is generally a fixed station that communicates with the user terminals and may also be referred to as a base station or some other terminology. A user terminal may be fixed or mobile and may also be referred to as a mobile station, a wireless device, a user equipment, or some other terminology. A system controller 130 couples to the access points and provides coordination and control for these access points.

Access point 110 is equipped with multiple antennas for data transmission. Each user terminal 120 may be equipped with a single antenna or multiple antennas for data transmission. A user terminal may communicate with the access point and may also communicate peer-to-peer with another user terminal. In the following description, a transmitting entity may be an access point or a user terminal, and a receiving entity may also be an access point or a user terminal. The transmitting entity is equipped with multiple ($N_T$) transmit antennas, and the receiving entity may be equipped with a single antenna or multiple ($N_R$) antennas. A MISO transmission exists when the receiving entity is equipped with a single antenna, and a MIMO transmission exists when the receiving entity is equipped with multiple antennas.

System 100 may be a single-carrier system or a multi-carrier system. Multiple carriers may be obtained with orthogonal frequency division multiplexing (OFDM), some other multi-carrier modulation techniques, or some other construct. OFDM effectively partitions the overall system bandwidth into multiple ($N_F$) orthogonal subbands, which are also referred to as tones, subcarriers, bins, and frequency channels. With OFDM, each subband is associated with a respective subcarrier that may be modulated with data.

In system 100, a transmitting entity may transmit data to a receiving entity using pseudo-random transmit steering (PRTS) to achieve improved performance. With PRTS, the transmitting entity performs spatial processing such that the data transmission observes an ensemble of effective channels and is not stuck on a single bad channel realization for an extended period of time. Consequently, performance is not dictated by the worst-case channel condition.

The spatial processing at the transmitting entity for pseudo-random transmit steering may be expressed as:

$$\underline{x}(m) = \underline{V}(m) \cdot \underline{s}(m) \ , \qquad\qquad\qquad \text{Eq (1)}$$

where $\underline{s}(m)$ is an $N_T \times 1$ vector with up to $N_T$ data symbols to be sent in transmission span $m$;
$\underline{V}(m)$ is an $N_T \times N_T$ steering matrix used for transmission span $m$; and
$\underline{x}(m)$ is an $N_T \times 1$ vector with $N_T$ transmit symbols to be sent from the $N_T$ transmit antennas in transmission span $m$.

As used herein, a "data symbol" is a modulation symbol for data, a "pilot symbol" is a modulation symbol for pilot, and a "transmit symbol" is a symbol to be sent from a transmit antenna. The pilot symbols are known *a priori* by both the transmitting and receiving entities.

A transmission span may cover time and/or frequency dimensions. For a single-carrier system, a transmission span may correspond to one symbol period, which is the time interval to transmit one data symbol. For a multi-carrier system, such as a MIMO system that utilizes OFDM, a transmission span may correspond to one subband in one OFDM symbol period. A transmission span may also cover multiple symbol periods and/or multiple subbands. Thus, *m* may be an index for time and/or frequency. A transmission span may also be referred to as a transmission interval, a signaling interval, a slot, or some other terminology.

Pseudo-random transmit steering may be used to achieve transmit diversity or spatial spreading, and may also be used in combination with a steered mode, as described below. The spatial processing at the receiving entity is also described below.

## 1. Steering Matrix Generation

The transmitting entity may perform spatial processing for pseudo-random transmit steering with a set of steering matrices (or transmit matrices), which may be denoted as $\{\underline{V}\}$, or $\underline{V}(i)$ for $i$ = 1 ... L, where L may be any integer greater than one. The steering matrices should be unitary matrices and satisfy the following:

$$\underline{V}^{H}(i) \cdot \underline{V}(i) = \underline{I} \ , \quad \text{for} \ \ i = 1 \ ... \ L \ , \qquad\qquad \text{Eq (2)}$$

where I is the identity matrix with ones along the diagonal and zeros elsewhere. Each steering matrix $\underline{V}(i)$ includes $N_T$ columns and may be expressed as $\underline{V}(i) = [\underline{v}_1(i) \ \underline{v}_2(i) \ \cdots \ \mathbf{v}_{N_T}(i)]$. Equation (2) indicates that each column of $\underline{V}(i)$ should have unit energy, or $\| \underline{v}_a(i) \| = \underline{v}_a^H(i) \cdot \underline{v}_a(i) = 1$ for $a$ = 1 ... $N_T$. This condition ensures that the $N_T$ data symbols transmitted simultaneously using $\underline{V}(i)$ have the same power. Equation (2) also indicates that the Hermitian inner product of any two columns of $\underline{V}(i)$ should be zero, or $\underline{v}_a^H(i) \cdot \underline{v}_b(i) = 0$ for $a$ = 1 ... $N_T$, $b$ = 1 ... $N_S$, and $a \neq b$. This condition ensures that the $N_T$ data symbols transmitted simultaneously are orthogonal to one another at the transmit antennas.

The set of L steering matrices may be generated in various manners. In an embodiment, the L steering matrices are generated from a base matrix, which is preferably a unitary matrix. The base matrix may be used as one of the L steering matrices. The other L-1 steering matrices may be generated by multiplying the rows of the base matrix with different scalars, as described below. In general, a scalar may be any real or complex value. However, to ensure that the steering matrices are unitary matrices, the scalars are selected to have unit magnitude and phases between 0 and $2\pi$ (or 0° and 360°).

In one embodiment, the base matrix is a Walsh matrix. A 2×2 Walsh matrix $\underline{W}_{2\times2}$ and a 4×4 Walsh matrix $\underline{W}_{4\times4}$ may be expressed as:

$$\underline{W}_{2\times2} = \begin{bmatrix} 1 & 1 \\ 1 & -1 \end{bmatrix} \quad \text{and} \quad \underline{W}_{4\times4} = \begin{bmatrix} 1 & 1 & 1 & 1 \\ 1 & -1 & 1 & -1 \\ 1 & 1 & -1 & -1 \\ 1 & -1 & -1 & 1 \end{bmatrix} . \qquad \text{Eq (3)}$$

A larger size Walsh matrix $\underline{W}_{2N\times2N}$ may be formed from a smaller size Walsh matrix $\underline{W}_{N\times N}$, as follows:

$$\underline{W}_{2N \times 2N} = \begin{bmatrix} \underline{W}_{N \times N} & \underline{W}_{N \times N} \\ \underline{W}_{N \times N} & -\underline{W}_{N \times N} \end{bmatrix}. \qquad \text{Eq (4)}$$

As indicated by equation (4), Walsh matrices have dimensions that are powers of two (e.g., 2, 4, 8, and so on) because of the manner in which these matrices are formed.

For an $N_R \times 2$ system, with $N_R \geq 2$, four exemplary steering matrices may be generated from the Walsh matrix $\underline{W}_{2 \times 2}$ as follows:

$$\underline{W}_{2\times2}^{1} = \begin{bmatrix} 1 & 1 \\ 1 & -1 \end{bmatrix}, \quad \underline{W}_{2\times2}^{2} = \begin{bmatrix} 1 & 1 \\ -1 & 1 \end{bmatrix}, \quad \underline{W}_{2\times2}^{3} = \begin{bmatrix} 1 & 1 \\ j & -j \end{bmatrix}, \quad \text{and} \quad \underline{W}_{2\times2}^{4} = \begin{bmatrix} 1 & 1 \\ -j & j \end{bmatrix},$$

where $\underline{W}_{2\times2}$ is equal to $\underline{W}_{2\times2}$;

$\underline{W}_{2\times2}^{2}$ is obtained by multiplying the second row of $\underline{W}_{2\times2}$ with -1 or $e^{j\pi}$ ;

$\underline{W}_{2\times2}^{3}$ is obtained by multiplying the second row of $\underline{W}_{2\times2}$ with $+j$ or $e^{j\pi/2}$; and

$\underline{W}_{2\times2}^{4}$ is obtained by multiplying the second row of $\underline{W}_{2\times2}$ with $-j$ or $e^{j\pi/2}$.

Additional steering matrices may be generated by multiplying the second row of $\underline{W}_{2\times2}$ with other scalars, e.g., $e^{\pm j3\pi/4}$, $e^{\pm j\pi/4}$, $e^{\pm j\pi/8}$, and so on. The set of L steering matrices may be formed as follows: $\underline{V}(1) = g_2 \cdot \underline{W}_{2\times2}^{1}$, $\underline{V}(2) = g_2 \cdot \underline{W}_{2\times2}^{2}$, and so on, where the scaling by $g_2 = 1/\sqrt{2}$ results in each column of V(i) having unit energy.

For an $N_R \times 4$ system, with $N_R \geq 4$, four exemplary steering matrices may be generated from the Walsh matrix $\underline{W}_{4\times4}$ as follows:

$$\underline{W}_{4\times4}^{1} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}, \qquad \underline{W}_{4\times4}^{2} = \begin{bmatrix} 1 & 1 & 1 & 1 \\ -1 & 1 & -1 & 1 \\ -1 & -1 & 1 & 1 \\ -1 & 1 & 1 & -1 \end{bmatrix},$$

$$\underline{W}_{4\times4}^{3} = \begin{bmatrix} 1 & 1 & 1 & 1 \\ j & -j & j & -j \\ j & j & -j & -j \\ j & -j & -j & j \end{bmatrix}, \quad \text{and} \quad \underline{W}_{4\times4}^{4} = \begin{bmatrix} 1 & 1 & 1 & 1 \\ j & -j & j & -j \\ 1 & 1 & -1 & -1 \\ 1 & -1 & -1 & 1 \end{bmatrix},$$

where $\underline{W}_{4\times4}^{1}$ is equal to $\underline{W}_{4\times4}$;

$\underline{W}_{4\times4}^{2}$ is obtained by multiplying each of rows 2 through 4 of $\underline{W}_{4\times4}$ with -1;

$\underline{\mathbf{W}}_{4\times4}^{3}$ is obtained by multiplying each of rows 2 through 4 of $\underline{\mathbf{W}}_{4\times4}$ with $+ j$; and

$\underline{\mathbf{W}}_{4\times4}^{4}$ obtained by multiplying row 2 of $\underline{\mathbf{W}}_{4\times4}$ with $+ j$.

The set of L steering matrices may be formed as follows: $\underline{\mathbf{V}}(1) = g_4 \cdot \underline{\mathbf{W}}_{4\times4}^{1}$, $\underline{\mathbf{V}}(2) = g_4 \cdot \underline{\mathbf{W}}_{4\times4}^{2}$, and

so on, where the scaling by $g_4 = 1/\sqrt{4} = 1/2$ results in each column of $\underline{\mathbf{V}}$(i) having unit energy.

In general, for an N×N base matrix, each of rows 2 through N of the base matrix may be independently multiplied with one of K different possible scalars. Thus, $K^{N-1}$ different steering matrices may be obtained from $K^{N-1}$ different permutations of the K scalars for the N-1 rows. For example, each of rows 2 through N may be independently multiplied with a scalar of $e^{j0} = +1$, $e^{j\pi} = -1$, $e^{j\pi/2} = +j$, or $e^{-j\pi/2} = -j$. In this case, for N = 4, 64 different steering matrices may be generated from the Walsh matrix $\underline{\mathbf{W}}_{4\times4}$ with the four different scalars. Additional steering matrices may be generated with other scalars, e.g., $e^{\pm j3\pi/4}$, $e^{\pm j\pi/4}$, $e^{\pm j\pi/8}$, and so on. In general, each row of the base matrix may be multiplied with any scalar having the form $e^{j\theta}$, where $\theta$ may be any phase value. Also in general, N×N steering matrices may be generated from N×N Walsh matrices as $\underline{\mathbf{V}}(i) = g_N \cdot \underline{\mathbf{W}}_{N\times N}^{i}$, where $g_N = 1/\sqrt{N}$.

Steering matrices derived based on a Walsh matrix have certain desirable properties. If the rows of the Walsh matrix are multiplied with scalars of $\pm 1$ and $\pm j$, then each element of a resultant steering matrix is $+ 1$, $-1$, $+ j$, or $- j$ and thus has a non-zero value for only the real or imaginary component. In , this case, the multiplication of a data symbol with an element of the steering matrix may be performed with just bit manipulation. For example, a multiplication of a complex-valued data symbol, $a + jb$, by -1 may be performed by inverting the sign bit of both the real and imaginary components of the data symbol, or $(a + jb)(-1 + j0) = -a - jb$. A multiplication by $+ j$ may be performed by swapping the real and imaginary components of the data symbol and inverting the sign bit of the real component, or $(a + jb)(0 + j) = -b + ja$. A multiplication by $- j$ may be performed by swapping the real and imaginary components of the data symbol and inverting the sign bits of both the real and imaginary components, or $(a + jb)(0 - j) = -b - ja$. Thus, if the elements of the L steering matrices belong in a set composed of $\{+1, -1, + j, - j\}$, then the computation performed by the transmitting entity for pseudo-random transmit steering can be greatly simplified.

In another embodiment, the base matrix is a Fourier matrix. A 2×2 Fourier matrix $\underline{\mathbf{D}}_{2\times2}$ is equal to the Walsh matrix $\underline{\mathbf{W}}_{2\times2}$, or $\underline{\mathbf{D}}_{2\times2} = \underline{\mathbf{W}}_{2\times2}$. A 3×3 Fourier matrix $\underline{\mathbf{D}}_{3\times3}$ and a 4×4 Fourier matrix $\underline{\mathbf{D}}_{4\times4}$ may be expressed as:

$$\underline{\mathbf{D}}_{3\times3} = \begin{bmatrix} 1 & 1 & 1 \\ 1 & e^{-j2\pi/3} & e^{-j4\pi/3} \\ 1 & e^{-j4\pi/3} & e^{-j2\pi/3} \end{bmatrix} \text{ and } \underline{\mathbf{D}}_{4\times4} = \begin{bmatrix} 1 & 1 & 1 & 1 \\ 1 & j & -1 & -j \\ 1 & -1 & 1 & -1 \\ 1 & -j & -1 & j \end{bmatrix}. \qquad \text{Eq (5)}$$

In general, for an N×N Fourier matrix $\underline{\mathbf{D}}_{N\times N}$, the element $d_{n,m}$ in the n-th row of the m-th column of $\underline{\mathbf{D}}_{N\times N}$ may be expressed as:

$$d_{n,m} = e^{-j2\pi \frac{(n-1)(m-1)}{N}}, \text{ for } n = \{1 \dots N\} \text{ and } m = \{1 \dots N\}. \qquad \text{Eq (6)}$$

Unlike Walsh matrices, Fourier matrices of any square dimension (e.g., 2, 3, 4, 5, and so on) may be formed.
For an $N_R \times 3$ system, with $N_R \geq 3$, four exemplary steering matrices may be generated from the Fourier matrix $\underline{\mathbf{D}}_{3\times3}$ as follows:

$$\underline{\mathbf{D}}_{3\times3}^{1} = \begin{bmatrix} 1 & 1 & 1 \\ 1 & e^{-j2\pi/3} & e^{-j4\pi/3} \\ 1 & e^{-j4\pi/3} & e^{-j2\pi/3} \end{bmatrix}, \qquad \underline{\mathbf{D}}_{3\times3}^{2} = \begin{bmatrix} 1 & 1 & 1 \\ -1 & e^{j\pi/3} & e^{-j\pi/3} \\ -1 & e^{-j\pi/3} & e^{j\pi/3} \end{bmatrix},$$

$$\underline{\mathbf{D}}_{3\times3}^{3} = \begin{bmatrix} 1 & 1 & 1 \\ e^{j\pi/2} & e^{-j\pi/6} & e^{-j5\pi/6} \\ e^{j\pi/2} & e^{-j5\pi/6} & e^{-j\pi/6} \end{bmatrix}, \text{ and } \underline{\mathbf{D}}_{3\times3}^{4} = \begin{bmatrix} 1 & 1 & 1 \\ e^{j\pi/2} & e^{-j\pi/6} & e^{-j5\pi/6} \\ 1 & e^{-j4\pi/3} & e^{-j2\pi/3} \end{bmatrix},$$

where $\underline{\mathbf{D}}_{3\times3}^{1}$ is equal to $\underline{\mathbf{D}}_{3\times3}$;

$\underline{\mathbf{D}}_{3\times3}^{2}$ is obtained by multiplying each of rows 2 and 3 of $\underline{\mathbf{D}}_{3\times3}$ with -1;

$\underline{\mathbf{D}}_{3\times3}^{3}$ is obtained by multiplying each of rows 2 and 3 of $\underline{\mathbf{D}}_{3\times3}$ with $+ j$; and

$\underline{\mathbf{D}}_{3\times3}^{4}$ is obtained by multiplying row 2 of $\underline{\mathbf{D}}_{3\times3}$ with $+ j$.

Each of rows 2 and 3 may be independently multiplied with a scalar of $+ 1$, $-1$, $+ j$, or $- j$. For N = 3, a total of 16 steering matrices may be generated with the four scalars. Additional steering matrices may be generated with other scalars, e.g., $e^{\pm j2\pi/3}$, $e^{\pm j\pi/3}$, $e^{\pm j\pi/4}$, $e^{\pm j\pi/6}$, and so on. The set of L steering matrices may be formed as follows: $\underline{\mathbf{V}}(1) = g_3 \cdot \underline{\mathbf{D}}_{3\times3}^{1}$, $\underline{\mathbf{V}}(2) = g_3 \cdot \underline{\mathbf{D}}_{3\times3}^{2}$, and so on, where the scaling by $g_3 = 1/\sqrt{3}$ results in each column of $\underline{\mathbf{V}}(i)$ having unit energy.

For the $N_R \times 4$ system, with $N_R \geq 4$, four exemplary steering matrices may be generated from the Fourier matrix $\underline{\mathbf{D}}_{4\times4}$ as follows:

$$\underline{\mathbf{D}}_{4\times4}^{1} = \begin{bmatrix} 1 & 1 & 1 & 1 \\ 1 & j & -1 & -j \\ 1 & -1 & 1 & -1 \\ 1 & -j & -1 & j \end{bmatrix}, \qquad \underline{\mathbf{D}}_{4\times4}^{2} = \begin{bmatrix} 1 & 1 & 1 & 1 \\ -1 & -j & 1 & j \\ -1 & 1 & -1 & 1 \\ -1 & j & 1 & -j \end{bmatrix},$$

$$\underline{\mathbf{D}}_{4\times4}^{3} = \begin{bmatrix} 1 & 1 & 1 & 1 \\ j & -1 & -j & 1 \\ j & -j & j & -j \\ j & 1 & -j & -1 \end{bmatrix}, \text{ and } \underline{\mathbf{D}}_{4\times4}^{4} = \begin{bmatrix} 1 & 1 & 1 & 1 \\ j & -1 & -j & 1 \\ 1 & -1 & 1 & -1 \\ 1 & -j & -1 & j \end{bmatrix},$$

where $\underline{\mathbf{D}}_{4\times4}^{1}$ is equal to $\underline{\mathbf{D}}_{4\times4}$;

$\underline{\mathbf{D}}_{4\times4}^{2}$ is obtained by multiplying each of rows 2 through 4 of $\underline{\mathbf{D}}_{4\times4}$ by -1;

$\underline{\mathbf{D}}_{4\times4}^{3}$ obtained by multiplying each of rows 2 through 4 of $\underline{\mathbf{D}}_{4x4}$ by $+j$; and

$\underline{\mathbf{D}}_{4\times4}^{4}$ is obtained by multiplying row 2 of $\underline{\mathbf{D}}_{4\times4}$ by $+j$.

Each of rows 2 through 4 may be independently multiplied with a scalar of $+1$, $-1$, $+j$, or $-j$. For N = 4, a total of 64 steering matrices may be generated with four scalars. Additional steering matrices may be generated with other scalars, e.g., $e^{\pm j3\pi/4}$, $e^{\pm j2\pi/3}$, $e^{\pm j\pi/3}$, $e^{\pm j\pi/4}$, $e^{\pm j\pi/6}$, $e^{\pm j\pi/8}$, and so on. The set of L steering matrices may be formed as follows: and so on.

For N = 4, the elements of the Fourier matrix $\underline{\mathbf{D}}_{4\times4}$ are in the set $\{+1, -1, +j, -j\}$. If the rows of $\underline{\mathbf{D}}_{4\times4}$ are multiplied with scalars of $\pm 1$ and $\pm j$, then the elements of the resultant steering matrices are also in the set $\{+1, -1, +j, -j\}$. In this case, the computation for spatial processing can then be simplified, as described above.

For N = 3, the elements of the Fourier matrix $\underline{\mathbf{D}}_{3\times3}$ are in a set composed of

$$\left\{+1, \quad -\frac{1}{2} + j\frac{\sqrt{3}}{2}, \quad -\frac{1}{2} - j\frac{\sqrt{3}}{2}\right\}.$$ If the rows of $\underline{\mathbf{D}}_{3\times3}$ are multiplied with scalars of $e^{\pm j\pi/6}$ (rotation by $\pm 30°$),

$e^{\pm j\pi/3}$ (rotation by $\pm 60°$), $e^{\pm j\pi/2}$ (rotation by $\pm 90°$), $e^{\pm j2\pi/3}$ (rotation by $\pm 120°$), $e^{\pm j5\pi/6}$ (rotation by $\pm 150°$), and $e^{j\pi} = -1$ (rotation by 180°), then the elements of the resultant matrices are such that at least one component belongs in a set composed of $\{0, +1, -1, +1/2, -1/2\}$. A multiplication for this component may be performed with a shift (if needed for a divide by 2) and a sign bit inversion (if needed). A multiplication of a complex-valued data symbol, $a + jb$, with an element of such a steering matrix would then require at most one real multiply for a component with a magnitude of $\sqrt{3}/2$.

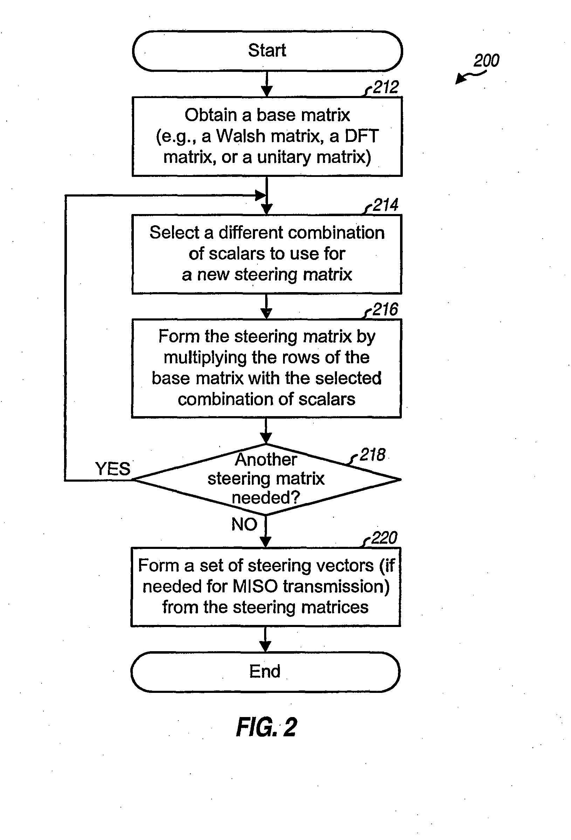

**FIG. 2** shows a flow diagram of a process 200 to generate steering matrices and steering vectors used for pseudo-random transmit steering. A base matrix is initially obtained (block 212). The base matrix may be a Walsh matrix, a Fourier matrix, or some other unitary matrix having orthogonal columns. A Walsh matrix may simplify the computation for PRTS but has a dimension that is a power of two. A Fourier matrix of any dimension may be formed, and certain dimensions (e.g., four) may provide simplified computation for PRTS.

A different combination of scalars is then selected for a new steering matrix to be generated (block 214). The first row of the base matrix is typically left alone (or multiplied with +1), and each of the other N-1 rows may be multiplied with any one of K possible scalars, where in general $N\geq2$ and $K\geq2$. The selected combination may include N-1 scalars for rows 2 through N of the base matrix, one scalar per row. The K scalars may be selected such that the elements of the resultant steering matrix have formats that can simply computation. For example, K may be four, and the four possible scalars may be $+1$, $-1$, $+j$, and $-j$. For the first steering matrix, the combination of scalars may all be +1. In general, zero, one, or more of the scalars in the selected combination may be equal to +1, which corresponds to no change to the row of the base matrix being multiplied with this scalar. In any case, the new steering matrix is formed by multiplying the N-1 rows of the base matrix with the selected combination of N-1 scalars (block 216). The generated steering matrix may be stored in a memory or used right away for spatial processing.

A determination is then made whether or not another steering matrix is needed (block 218). If the answer is 'yes, then the process returns to block 214 and a different combination of scalars is selected for the next steering matrix. If a set of L steering matrices is being generated, then L different combinations of scalars are used so that duplicate steering matrices are not generated for the set. If steering matrices are being generated on the fly, then the combination of scalars for each steering matrix may be selected in a manner to avoid duplicate steering matrices being generated, e.g., within a predetermined number of transmission spans.

The different combinations of scalars may be selected in a deterministic manner to avoid duplication. As an example for N = 4 and K = 4, a 3-digit base-4 counter may be used, with the three digits being labeled as $x$, $y$, and $z$. Digit x may be associated with row 2 of the base matrix, digit $y$ may be associated with row 3, and digit $z$ may be associated with row 4. Each digit has a range of 0 through 3. The scalar +1 may be used for row 2 of the base matrix if $x = 0$, the scalar -1 may be used if $x = 1$, the scalar $+j$ may be used if $x = 2$, and the scalar $-j$ may be used if $x = 3$. Digits $y$ and $z$ similarly determine which scalars to use for rows 3 and 4, respectively, of the base matrix. The counter may be incremented in block 214 for each new steering matrix. For example, the counter may count from 000 through 003, then 010 through 013, then 020 through 023, then 030 through 033, then 100 through 103, and so on, and finally 330 through 333. The three digits ($xyz$) of the counter would determine which scalars to use for rows 2 through 4 of the base matrix. Other mechanisms and schemes may also be used to select different combinations of scalars to use for the rows of the base matrix to generate different steering matrices. After a different combination of scalars has been selected in block 214, another steering matrix is generated using this combination of scalars in block 216.

Back at step 218, if another steering matrix is not needed (e.g., because all L steering matrices for the set have been generated), then a set of steering vectors may be formed if needed for MISO transmission (block 220). The steering vectors may be formed with the columns of the steering matrices generated in blocks 212 through 218. The process then terminates.

The steering matrices generated in the manner described above are different permutations of the base matrix, where the permutations are determined by the different combinations of scalars. The scalars are selected to have unit magnitude so that the steering matrices are unitary matrices. The scalars may further be selected such that the elements of the steering matrices can simplify the computation for PRTS. The elements of each steering matrix generated from a Walsh matrix or a Fourier matrix also have equal magnitude of $1/\sqrt{N}$, which simplifies the scaling of these elements and provides other benefits.

The steering matrices and steering vectors used for pseudo-random transmit steering may be generated based on a base matrix and stored in a memory. Thereafter, one steering matrix/vector may be selected for use for each transmission span, and the selected steering matrix/vector is retrieved from the memory. Alternatively, the steering matrices/vectors may be generated in real-time as they are needed.

As noted above, each steering vector may be viewed as a degenerated steering matrix containing just one column. Thus, as used herein, a matrix may contain one or multiple columns.

## 2. Steering Matrix Selection

The L steering matrices in the set may be selected for use in various manners. In one embodiment, the steering matrices are selected from the set of L steering matrices in a deterministic manner. For example, the L steering matrices may be cycled through and selected in sequential order, starting with $\underline{V}(1)$, then $\underline{V}(2)$, and so on, and then $\mathbf{V}(L)$. In another embodiment, the steering matrices are selected from the set in a pseudo-random manner. For example, the steering matrix to use for each transmission span $m$ may be selected based on a function $f(m)$ that pseudo-randomly selects one of the L steering matrices, or $\underline{V}(f(m))$. In yet another embodiment, the steering matrices are selected from the set in a "permutated" manner. For example, the L steering matrices may be cycled through and selected for use in sequential order. However, the starting steering matrix for each cycle may be selected in a pseudo-random manner, instead of always being $\underline{V}(1)$. The L steering matrices may also be selected in other manners.

The steering matrix selection may also be dependent on the number of steering matrices (L) in the set and the number of transmission spans (M) in a transmission block over which pseudo-random transmit steering is to be applied. The transmission block may correspond to a data packet, a code block or codeword, an OFDM symbol, a protocol data unit (PDU), and so on. In general, the number of steering matrices (L) may be greater than, equal to, or less than the transmission block length (M). If L = M, then a different steering matrix may be selected for each of the M transmission spans for the transmission block. If L<M, then the steering matrices are reused for each transmission block. If L > M, then a subset of the steering matrices is used for each transmission block. For all three cases, the steering matrices may be selected in a deterministic, pseudo-random, or permutated manner, as described above.

## 3. MIMO Transmission

In system 100, a MIMO channel exists between a multi-antenna transmitting entity and a multi-antenna receiving entity. For a single-carrier system, the MIMO channel formed by the $N_T$ antennas at the transmitting entity and the $N_R$ antennas at the receiving entity may be characterized by an $N_R \times N_T$ channel response matrix $\underline{\mathbf{H}}$, which may be expressed as:

$$\underline{\mathbf{H}} = \begin{bmatrix} h_{1,1} & h_{1,2} & \cdots & h_{1,N_T} \\ h_{2,1} & h_{2,2} & \cdots & h_{2,N_T} \\ \vdots & \vdots & \ddots & \vdots \\ h_{N_R,1} & h_{N_R,2} & \cdots & h_{N_R,N_T} \end{bmatrix}, \qquad \text{Eq (7)}$$

where entry $h_{i,\ell}$, for $i = 1 \dots N_R$ and $\ell = 1 \dots N_T$, denotes the coupling or complex gain between transmit antenna $\ell$ and receive antenna $i$. A different MIMO channel exists between each different combination of multi-antenna transmitting entity and multi-antenna receiving entity. For simplicity, the MIMO channel is assumed to be full rank with $N_s = N_T \leq N_R$.

For a MIMO transmission, the transmitting entity may perform spatial processing for pseudo-random transmit steering as follows:

$$\underline{x}_{mimo,pr}(m) = \underline{V}(m) \cdot \underline{s}(m) \; , \qquad\qquad \text{Eq (8)}$$

where $x_{mimo,pr}(m)$ is a vector with $N_T$ transmit symbols to be sent from the $N_T$ transmit antennas in transmission span $m$. The steering matrix $\underline{V}(m)$ to use for each transmission span may be selected from the set of L steering matrices, as described above. If the system utilizes OFDM, then one substream of data symbols may be sent on each subband used for data transmission. The transmitting and receiving entities would then perform spatial processing for each data subband separately.

The received symbols at the receiving entity may be expressed as:

$$
\begin{aligned}
\underline{r}_{pr}(m) \;\; &= \underline{H}(m) \cdot \underline{x}_{mimo,pr}(m) + \underline{n}(m) = \underline{H}(m) \cdot \underline{V}(m) \cdot \underline{s}(m) + \underline{n}(m) \\
&= \underline{H}_{eff}(m) \cdot \underline{s}(m) + \underline{n}(m) \;\; ,
\end{aligned}
\qquad \text{Eq (9)}
$$

where $\underline{r}_{pr}(m)$ is a vector with $N_R$ received symbols from the $N_R$ receive antennas;
$\underline{H}_{eff}(m)$ is an $N_T \times N_T$ effective MIMO channel response matrix for transmission span $m$, which is $\underline{H}_{eff}(m) = H(m) \cdot \underline{V}(m)$; and
$\underline{n}(m)$ is a noise vector.

For simplicity, the noise is assumed to be additive white Gaussian noise (AWGN) with a zero mean vector and a covariance matrix of $\underline{\Lambda} = \sigma^2 \cdot \underline{I}$, where $\sigma^2$ is the variance of the noise observed by the receiving entity.

The spatial processing at the transmitting entity with the steering matrix $\underline{V}(m)$ results in the data symbols in $\underline{s}(m)$ observing an effective MIMO channel response $\underline{H}_{eff}(m)$, which includes the actual MIMO channel response $\underline{H}(m)$ and the steering matrix $\underline{V}(m)$. The receiving entity may perform channel estimation in various manners.

If the transmitting entity transmits pilot symbols without pseudo-random transmit steering, then the receiving entity can obtain an estimate of $\underline{H}(m)$ directly. For simplicity, the description herein assumes channel estimation without errors. The receiving entity can obtain an estimate of $\underline{H}(m_p)$ for transmission span $m_p$ based on pilot symbols received from the transmitting entity in this transmission span. If the transmitting entity transmits data symbols in another transmission span $m_d$ using a steering matrix $\underline{V}(m_d)$, then the receiving entity may derive an estimate of $H_{eff}(m_d)$ for this transmission span as follows: $\underline{H}_{eff}(m_d) = \underline{H}(m_p) \cdot \underline{V}(m_d)$. The MIMO channel response is assumed to be constant across transmission spans $m_p$ and $m_d$, so that $H(m_d) = H(m_p)$. The computation for $\underline{H}_{eff}(m_d)$ may be simplified if $\underline{V}(m)$ is suitably generated, as described above.

If the transmitting entity transmits pilot symbols with pseudo-random transmit steering, then the receiving entity can obtain an estimate of $\underline{H}_{eff}(m)$ directly. The receiving entity can obtain an estimate of $\underline{H}_{eff}(m_p)$ for transmission span $m_p$ based on pilot symbols received from the transmitting entity in this transmission span. If the pilot symbols were transmitted using $\underline{V}(m_p)$, then $\underline{H}_{eff}(m_p) = \underline{H}(m_p) \cdot \underline{V}(m_p)$. The receiving entity may then derive an estimate of $\underline{H}(m_p)$, as follows: $\underline{H}(m_p) = \underline{H}_{eff}(m_p) \cdot \underline{V}^H(m_p)$. If the transmitting entity transmits data symbols in another transmission span $m_d$ using the steering matrix $\underline{V}(m_d)$, then the receiving entity may derive an estimate of $\underline{H}_{eff}(m_d)$ for this transmission span as follows: $\underline{H}_{eff}(m_d) = \underline{H}(m_p) \cdot \underline{V}(m_d)$. Again, the MIMO channel response is assumed to be constant across transmission spans $m_p$ and $m_d$, so that $\underline{H}(m_d) = \underline{H}(m_p)$. The computation for $\underline{H}(m_p)$ and $\underline{H}_{eff}(m_d)$ may be simplified if the steering matrices are suitably generated.

The receiving entity may use interpolation and/or extrapolation to obtain MIMO channel response estimates. For example, the transmitting entity may transmit pilot symbols on a subset of the $N_F$ total subbands. The receiving entity may obtain an actual MIMO channel response estimate $\underline{H}(m)$ or an effective MIMO channel response estimate $\underline{H}_{eff}(m)$ for each pilot subband $m$ (which is a subband with pilot transmission) based on the pilot symbol received on that subband. If the receiving entity obtains $\underline{H}_{eff}(m)$, then it can derive $\underline{H}(m)$ as described above. The receiving entity may then interpolate and/or extrapolate $\underline{H}(m)$ for all pilot subbands to obtain $\underline{H}(m)$ for all subbands of interest.

For each transmission span $m$ with data transmission, the receiving entity may perform spatial processing (or spatial matched filtering) on the received symbols in $\underline{r}_{pr}(m)$ with either $\underline{H}(m)$ or $\underline{H}_{eff}(m)$ to obtain a vector $\hat{\underline{s}}_{pr}(m)$ of detected

symbols, which are estimates of the transmitted data symbols. The receiving entity may also derive the detected symbols using various receiver processing techniques including (1) a channel correlation matrix inversion (CCMI) technique, which is also commonly referred to as a zero-forcing technique, and (2) a minimum mean square error (MMSE) technique.

The receiving entity may perform receiver spatial processing with the effective MIMO channel response estimate $\underline{H}_{eff}(m)$. Table 1 summarizes the receiver spatial processing for the CCMI and MMSE techniques with $\underline{H}_{eff}(m)$. In Table 1, $\underline{M}_{ccmi}(m)$ is a spatial filter matrix for the CCMI technique, $\underline{M}_{mmse}(m)$ is a spatial filter matrix for the MMSE technique, and $\underline{D}_{mmse}(m)$ is a diagonal matrix for the MMSE technique (which contains the diagonal elements of $\underline{M}_{mmse}(m) \cdot \underline{H}_{eff}(m)$).

Table 1

| Technique | Receiver Spatial Processing | |
|---|---|---|
| CCMI | $\hat{\underline{s}}_{ccmi}(m) = \underline{M}_{ccmi}(m) \cdot \underline{r}_{pr}(m)$ | Receiver Spatial Processing |
| | $\underline{M}_{ccmi}(m) = [\underline{H}_{eff}^{H}(m) \cdot \underline{H}_{eff}(m)]^{-1} \cdot \underline{H}_{eff}^{H}(m)$ | Spatial Filter Matrix |
| MMSE | $\hat{\underline{s}}_{mmse}(m) = \underline{D}_{mmse}^{-1}(m) \cdot \underline{M}_{mmse}(m) \cdot \underline{r}_{pr}(m)$ | Receiver Spatial Processing |
| | $\underline{M}_{mmse}(m) = \underline{H}_{eff}^{H}(m) \cdot [\underline{H}_{eff}(m) \cdot \underline{H}_{eff}^{H}(m) + \sigma^2 \cdot \underline{I}]^{-1}$ <br> $\underline{D}_{mmse}(m) = \text{diag}[\underline{M}_{mmse}(m) \cdot \underline{H}_{eff}(m)]$ | Spatial Filter Matrix |

The receiving entity may also perform receiver spatial processing with the actual MIMO channel response estimate $\underline{H}(m)$. In this case, the receiving entity derives a spatial filter matrix $\underline{M}(m)$ based on $\underline{H}(m)$ and using, e.g., the CCMI or MMSE technique, in which case $\underline{H}(m)$ substitutes for $\underline{H}eff(m)$ in Table 1. The receiving entity then performs spatial matched filtering on $\underline{r}_{pr}(m)$ with $\underline{M}(m)$ to obtain $\hat{\underline{x}}(m)$, which is an estimate of $\underline{x}(m)$, as follows: $\hat{\underline{x}}(m) = \underline{M}(m) \cdot \underline{r}_{pr}(m)$.

The receiving entity also perform scaling with $\underline{D}_{mmse}^{-1}(m)$ for the MMSE technique. The receiving entity then performs spatial despreading (or equalization) on $\hat{\underline{x}}(m)$ with $\underline{V}(m)$ to obtain $\underline{s}_{pr}(m)$, as follows: $\hat{\underline{s}}_{pr}(m) = \underline{V}^{H}(m) \cdot \hat{\underline{x}}(m)$.

. The above description assumes a full rank MIMO channel with $N_S = N_T \leq N_R$ and the transmitting entity using $N_T \times N_T$ steering matrices for spatial processing. If the MIMO channel is rank deficient so that $N_S < N_T \leq N_R$, or if the number of receive antennas is less than the number of transmit antennas so that $N_S = N_R < N_T$, then the transmitting entity can select and use $N_S$ columns of each $N_T \times N_T$ steering matrix for spatial processing. In this case, $\underline{s}(m)$ is an $N_S \times 1$ vector with $N_S$ data symbols for $N_S$ data symbol streams and $\underline{x}_{mimo,pr}(m)$ is an $N_T \times 1$ vector with $N_T$ transmit symbols for the $N_T$ transmit antennas. The transmitting entity can scale each data symbol in $\underline{s}(m)$ or each transmit symbol in $\underline{x}_{mimo,pr}(m)$ by $g_S = \sqrt{N_T / N_S}$ so that the full transmit power available for each transmit antenna is used to transmit the $N_S$ data symbol streams.

Pseudo-random transmit steering may be used to achieve transmit diversity or spatial spreading for a MIMO transmission, depending on how the steering matrices are applied. For example, a PDU containing a pilot portion (used for channel estimation) and a data portion (carrying a block of data symbols) may be transmitted on multiple subbands and in multiple symbol periods. To achieve transmit diversity, the transmitting entity may use (1) different steering matrices across the multiple subbands but (2) the same steering matrix across the pseudo-random steered portion of the PDU for each subband. In this case, the steering matrices for the PDU are only a function of subband, or $\underline{V}(k)$. The transmitting entity may use as many different steering matrices as possible across the subbands to achieve greater transmit diversity.

To achieve spatial spreading, the transmitting entity may use (1) different steering matrices across the multiple subbands and (2) different steering matrices across the pseudo-random steered portion of the PDU for each subband. In this case, the steering matrices for the PDU would be a function of both subband and symbol period, or $\underline{V}(n,k)$. For spatial spreading, only the recipient receiving entity has knowledge of the steering matrix used by the transmitting entity for each subband and each symbol period and is able to perform the complementary spatial despreading to recover the transmitted PDU. The other receiving entities do not have knowledge of the steering matrices and the PDU transmission appears spatially random to these entities. As a result, these other receiving entities have a low likelihood of recovering the transmitted PDU.

Pseudo-random transmit steering may also be used to achieve spatial spreading for a steered mode. For the steered mode, the transmitting entity may perform singular value decomposition of $\underline{\mathbf{H}}(m)$, as follows:

$$\underline{\mathbf{H}}(m) = \underline{\mathbf{U}}(m) \cdot \underline{\Sigma}(m) \cdot \underline{\mathbf{E}}^H(m) \ , \qquad\qquad \text{Eq (10)}$$

where $U(m)$ is an $N_R \times N_R$ unitary matrix of left eigenvectors of $\underline{\mathbf{H}}(m)$;
$\Sigma(m)$ is an $N_R \times N_T$ diagonal matrix of singular values of $\underline{\mathbf{H}}(m)$; and
$\underline{\mathbf{E}}(m)$ is an $N_T \times N_T$ unitary matrix of right eigenvectors of $\underline{\mathbf{H}}(m)$.

The transmitting entity may perform spatial processing for the steered mode with spatial spreading as follows:

$$\underline{\mathbf{x}}_{mimo,sm}(m) = \underline{\mathbf{E}}(m) \cdot \underline{\mathbf{V}}(m) \cdot \underline{\mathbf{s}}(m) \ . \qquad\qquad \text{Eq (11)}$$

As shown in equation (11), the transmitting entity first performs spatial processing on $\underline{\mathbf{s}}(m)$ with $\underline{\mathbf{V}}(m)$ for spatial spreading and then performs spatial processing on the resultant spread symbols with $\underline{\mathbf{E}}(m)$ for the steered mode. The spread symbols (instead of the data symbols) are transmitted on the $N_S$ eigenmodes of the MIMO channel. These eigenmodes may be viewed as orthogonal spatial channels obtained by the decomposition of $\underline{\mathbf{H}}(m)$. For the steered mode with spatial spreading, the effective MIMO channel observed by the data symbols for each transmission span includes both $\underline{\mathbf{E}}(m)$ and $\underline{\mathbf{V}}(m)$ used by the transmitting entity. For spatial spreading, the transmitting entity uses different steering matrices across the pseudo-random steered portion of a PDU, and only the recipient receiving entity knows these steering matrices.
The received symbols at the receiving entity for the steered mode with spatial spreading may be expressed as:

$$\underline{\mathbf{r}}_{sm}(m) = \underline{\mathbf{H}}(m) \cdot \underline{\mathbf{x}}_{mimo,sm}(m) + \underline{\mathbf{n}}(m) = \underline{\mathbf{H}}(m) \cdot \underline{\mathbf{E}}(m) \cdot \underline{\mathbf{V}}(m) \cdot \underline{\mathbf{s}}(m) + \underline{\mathbf{n}}(m) \ . \qquad \text{Eq (12)}$$

The receiving entity performs spatial processing for the steered mode and spatial despreading as follows:

$$\hat{\underline{\mathbf{s}}}_{sm}(m) = \underline{\mathbf{M}}_{sm}(m) \cdot \underline{\mathbf{r}}_{sm}(m) = \underline{\mathbf{V}}^H(m) \cdot \underline{\Sigma}^{-1}(m) \cdot \underline{\mathbf{U}}^H(m) \cdot \underline{\mathbf{r}}_{sm}(m) = \underline{\mathbf{s}}(m) + \underline{\mathbf{n}}'(m) \ , \qquad \text{Eq (13)}$$

where $\underline{\mathbf{M}}_{sm}(m)$ is a spatial filter matrix for the steered mode with spatial despreading and $\underline{\mathbf{n}}'(m)$ is the post-detection noise. The spatial filter matrix $\underline{\mathbf{M}}_{sm}(m)$ may be expressed as:

$$\underline{\mathbf{M}}_{sm}(m) = \underline{\mathbf{V}}^H(m) \cdot \underline{\Sigma}^{-1}(m) \cdot \underline{\mathbf{U}}^H(m) \ . \qquad\qquad \text{Eq (14)}$$

As shown in equations (13) and (14), the receiving entity can recover the transmitted data symbols by first performing the receiver spatial processing with $\underline{\Sigma}^{-1}(m) \cdot \underline{\mathbf{U}}^H(m)$ for the steered mode followed by spatial despreading with $\underline{\mathbf{V}}(m)$.

### 4. MISO Transmission

In system 100, a MISO channel exists between a multi-antenna transmitting entity and a single-antenna receiving entity. For a single-carrier system, the MISO channel formed by the $N_T$ antennas at the transmitting entity and the single antenna at the receiving entity may be characterized by a $1 \times N_T$ channel response row vector h, which may be expressed

as:

$$\underline{\mathbf{h}} = [h_1 \quad h_2 \quad \dots \quad h_{\mathrm{N_T}}] \; , \qquad\qquad \text{Eq (15)}$$

where entry $h_i$, for $i = 1 \dots \mathrm{N_T}$, denotes the coupling between transmit antenna i and the single receive antenna. A different MISO channel exists between each different combination of multi-antenna transmitting entity and single-antenna receiving entity.

The transmitting entity may transmit data from its multiple antennas to the single-antenna receiving entity using pseudo-random transmit steering. The transmitting entity may generate a set of L steering vectors, which may be denoted as $\{\underline{v}\}$ or $\underline{v}(i)$ for $i = 1 \dots L$ , as described above.

For a MISO transmission, the transmitting entity may perform spatial processing for pseudo-random transmit steering, as follows:

$$\underline{\mathbf{x}}_{miso}(m) = \underline{\mathbf{v}}(m) \cdot s(m) \; , \qquad\qquad \text{Eq (16)}$$

where $s(m)$ is a data symbol to be sent in transmission span $m$;
$\underline{v}(m)$ is a steering vector used for transmission span $m$; and
$\underline{x}_{miso}(m)$ is a vector with $\mathrm{N_T}$ transmit symbols to be sent from the $\mathrm{N_T}$ transmit antennas in transmission span $m$.

The steering vector $\underline{v}(m)$ to use for each transmission span may be derived from the set of L steering matrices. The $\mathrm{N_T}$ columns of each steering matrix $\underline{\mathbf{V}}(i)$ in set $\{\underline{\mathbf{V}}\}$ may be used to form $\mathrm{N_T}$ different steering vectors. To utilize the full transmit power available for each transmit antenna, each column of $\underline{\mathbf{V}}(i)$ may be scaled by $\sqrt{\mathrm{N_T}}$ and used as a steering vector.

The received symbols at the receiving entity may be expressed as:

$$\begin{aligned} r(m) \;\; &= \underline{\mathbf{h}}(m) \cdot \underline{\mathbf{x}}_{miso}(m) + n(m) = \underline{\mathbf{h}}(m) \cdot \underline{\mathbf{v}}(m) \cdot s(m) + n(m) \\ &= h_{eff}(m) \cdot s(m) + n(m) \quad , \end{aligned} \qquad \text{Eq (17)}$$

where $r(m)$ is a received symbol for transmission span $m$;
$h_{eff}(m)$ is an effective single-input single-output (SISO) channel response for transmission span $m$, which is $h_{eff}(m) = h(m) \cdot \underline{\mathbf{v}}(m)$; and
$n(m)$ is the noise at the receiving entity for transmission span $m$.

The effective SISO channel response $h_{eff}(m)$ for each transmission span $m$ is determined by the actual MISO channel response $\underline{\mathbf{h}}(m)$ for that transmission span and the steering vector $\underline{v}(m)$ used for the transmission span. If the transmitting entity transmits pilot symbols without pseudo-random transmit steering, then the receiving entity can obtain an estimate of $\underline{\mathbf{h}}(m)$ directly. The receiving entity may then derive an estimate of $h_{eff}(m)$ for each transmission span used for data transmission as follows: $h_{eff}(m) = \underline{\mathbf{h}}(m) \cdot \underline{v}(m)$. The MISO channel response is assumed to be constant across the transmission spans used for pilot and data transmission. The computation for $h_{eff}(m)$ may be simplified if $\underline{v}(m)$ is suitably generated, as described above.

If the transmitting entity transmits pilot symbols with pseudo-random transmit steering, then the receiving entity can obtain an estimate of $h_{eff}(m)$ directly. The estimate of $h_{eff}(m)$ for each transmission span $m$ includes the steering vector $\underline{v}(m)$ used for that transmission span. To estimate $\underline{\mathbf{h}}(m)$, which is of dimension $1 \times \mathrm{N_T}$, the receiving entity may obtain estimates of $h_{eff}(m)$ for $\mathrm{N_T}$ transmission spans based on pilot symbols transmitted by the transmitting entity in the $\mathrm{N_T}$ transmission spans using $\mathrm{N_T}$ steering vectors. The receiving entity may then derive an estimate of $\underline{\mathbf{h}}(m)$ based on (1) the $\mathrm{N_T}$ different $h_{eff}(m)$ estimates for the $\mathrm{N_T}$ transmission spans and (2) the $\mathrm{N_T}$ steering vectors used for these transmission spans. The receiving entity may then compute $h_{eff}(m)$ for each transmission span with data transmission based on $\underline{h}(m)$ derived from the pilot symbols and the steering vector $\underline{v}(m)$ used for that transmission span.

The receiving entity may perform detection (e.g., matched filtering) on the received symbols with the effective SISO channel response estimate $h_{eff}(m)$, as follows:

$$\hat{s}(m) = \frac{h^*_{eff}(k) \cdot r(m)}{|h_{eff}(k)|^2} = s(m) + n'(m) \ , \qquad \text{Eq (18)}$$

where $s(m)$ is a detected symbol for transmission span $m$, which is an estimate of $s(m)$, $n'(m)$ is the post-detection noise, and "*" denotes a conjugate.

The receiving entity may also perform receiver spatial processing with the actual MISO channel response estimate $\underline{h}(m)$ and the steering vector v(m), as follows:

$$\hat{s}(m) = g_a \cdot \underline{v}^H(m) \cdot \underline{h}^H(m) \cdot r(m) = s(m) + n'(m) \ , \qquad \text{Eq (19)}$$

where $g_a = 1/|\underline{v}^H(m) \cdot \underline{h}^H(m)|^2$.

Pseudo-random transmit steering may be used to achieve transmit diversity or spatial spreading for a MISO transmission, in similar manner as that described above for a MIMO transmission.

## 5. System

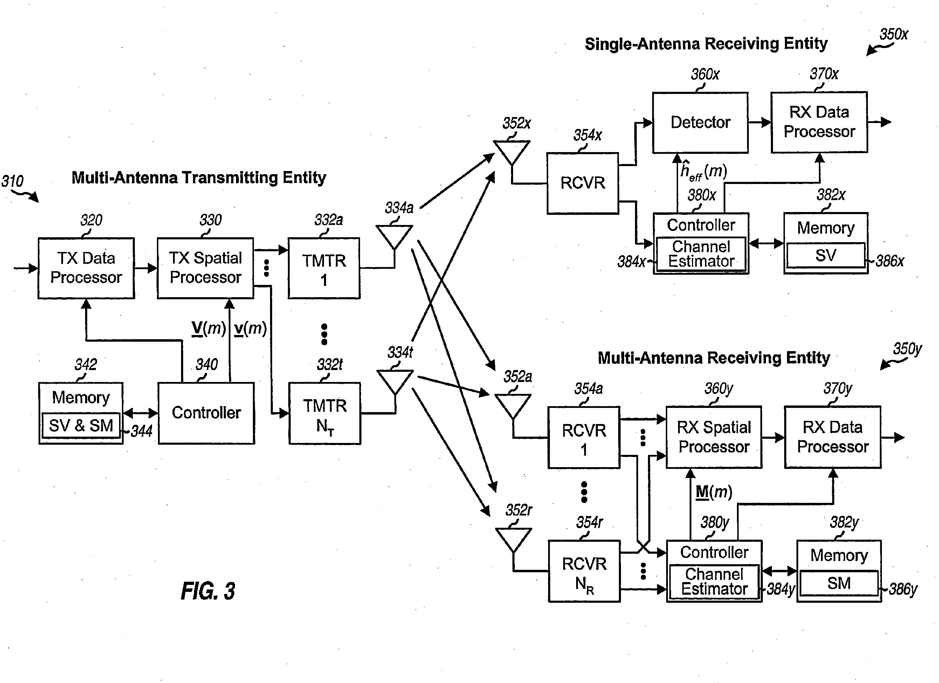

**FIG. 3** shows a block diagram of a multi-antenna transmitting entity 310, a single-antenna receiving entity 350x, and a multi-antenna receiving entity 350y in system 100. Transmitting entity 310 may be an access point or a multi-antenna user terminal. Each receiving entity 350 may also be an access point or a user terminal.

At transmitting entity 310, a transmit (TX) data processor 320 processes (e.g., codes, interleaves, and symbol maps) each packet of data to obtain a corresponding block of data symbols. A TX spatial processor 330 receives and demultiplexes pilot and data symbols as appropriate for the system, performs spatial processing for pseudo-random transmit steering and/or the steered mode, and provides $N_T$ streams of transmit symbols to $N_T$ transmitter units (TMTR) 332a through 332t. TX spatial processor 320 may perform spatial processing with steering matrices $\underline{V}(m)$, e.g., as shown in equation (8) or (11), for a MIMO transmission to receiving entity 350y. TX spatial processor 320 may also perform spatial processing with steering vectors $\underline{v}(m)$, e.g., as shown in equation (16), for a MISO transmission to receiving entity 350x. Each transmitter unit 332 processes its transmit symbol stream (and performs OFDM modulation, if applicable) to generate a modulated signal. Transmitter units 332a through 332t provide $N_T$ modulated signals for transmission from $N_T$ antennas 334a through 334t, respectively.

At single-antenna receiving entity 350x, an antenna 352x receives the $N_T$ transmitted signals and provides a received signal to a receiver unit (RCVR) 354x. Receiver unit 354x performs processing complementary to that performed by transmitter units 332 (e.g., OFDM demodulation, if applicable) and provides (1) received data symbols to a detector 360x and (2) received pilot symbols to a channel estimator 384x within a controller 380x. Channel estimator 384x estimates the effective SISO channels between transmitting entity 310 and receiving entity 350x. Detector 360x performs detection on the received data symbols based on the effective SISO channel response estimates, e.g., as shown in equation (18), and provides a stream of detected symbols. A receive (RX) data processor 370x then processes (e.g., symbol dem deinterleaves, and decodes) the detected symbol stream and provides decoded data for each data packet

At multi-antenna receiving entity 350y, $N_R$ antennas 352a through 352r receive the $N_T$ transmitted signals, and each antenna 352 provides a received signal to a respective receiver unit 354. Each receiver unit 354 processes a respective received signal and provides (1) received data symbols to a receive (RX) spatial processor 360y and (2) received pilot symbols to a channel estimator 384y within a controller 380y. Channel estimator 384y estimates for the actual or effective MIMO channels between transmitting entity 310 and receiving entity 350y. Controller 380y derives spatial filter matrices based on (1) the MIMO channel response estimates and the steering matrices or (2) the effective MIMO channel response estimates. The spatial filter matrices for the CCMI or MMSE technique may be derived as shown in Table 1. The spatial filter matrix for the steered mode with spatial spreading may be derived as shown in equation (14). RX spatial processor 360y performs spatial processing on the received data symbols with the spatial filter matrices, e.g., as shown in Table 1 or equation (13), and provides detected symbols. An RX data processor 370y then processes the detected symbols and provides decoded data for each data packet.

Controllers 340, 380x, and 380y control the operation of the processing units at transmitting entity 310 and receiving entities 350x and 350y, respectively. Controllers 340, 380x, and 380y may generate steering matrices/vendors as described above. Memory units 342, 382x, and 382y store data and/or program code used by controllers 340, 380x, and 380y, respectively. For example, these memory units may store a set of L steering vectors (SV) and/or a set of L steering matrices (SM).

The techniques described herein to generate and use steering matrices/vectors for pseudo-random transmit steering may be implemented by various means. For example, these techniques may be implemented in hardware, software, or a combination thereof. For a hardware implementation, the processing units used to generate steering matrices/vectors and/or perform spatial processing with these steering matrices/vectors may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

For a software implementation, the techniques described herein may be implemented with modules (e.g., procedures, functions, and so on) that perform the functions described herein. The software codes may be stored in a memory unit (e.g., memory unit 342, 382x, or 382y in FIG. 3) and executed by a processor (e.g., controller 340, 380x, or 380y). The memory unit may be implemented within the processor or external to the processor, in which case it can be communicatively coupled to the processor via various means as is known in the art.

Headings are included herein for reference and to aid in locating certain sections. These headings are not intended to limit the scope of the concepts described therein under, and these concepts may have applicability in other sections throughout the entire specification.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A method of generating steering matrices used for spatial processing in a wireless multi-antenna communication system, comprising:

   obtaining (212) a base matrix;
   selecting (214) at least one different combination of scalars, each combination including at least one scalar for at least one row of the base matrix, one scalar per row, each scalar being a real or complex value; and
   forming (216) at least one steering matrix by multiplying the base matrix with the at least one different combination of scalars, wherein one steering matrix is formed by each combination of scalars.

2. The method of claim 1, further comprising:

   forming (220) a plurality of steering vectors with columns of the at least one steering matrix.

3. The method of claim 1 or 17, wherein the base matrix is a Walsh matrix.

4. The method of claim 1 or 17, wherein the base matrix is a Fourier matrix.

5. The method of claim 1, wherein the base matrix is a unitary matrix having orthogonal columns.

6. The method of claim 1 or 17, wherein each steering matrix has orthogonal columns.

7. The method of claim 1, wherein scalars for the at least one different combination are selected from a set comprising +1, -1, +j, and -$j$, where j is a square root of - 1.

8. The method of claim 1 or 17, wherein each element of the at least one steering matrix belongs in a set comprising +1, -1, +$j$, and $j$, where $j$ is a square root of -1.

9. The method of claim 1 or 17, wherein each steering matrix includes elements having equal magnitude.

10. The method of claim 1, wherein the base matrix has a dimension of N by N, where N is an integer greater than one, and wherein each combination includes N - 1 scalars for N - 1 rows of the base matrix.

11. The method of claim 10, wherein N is a power of two.

12. The method of claim 1, wherein the at least one combination of scalars is obtained with a base-K counter having one digit for each of the at least one scalar in a combination, where K is the number of different possible scalars usable for each row of the base matrix.

13. An apparatus (340; 380) operable to generate steering matrices used for spatial processing in a wireless multi-antenna communication system, comprising:

means for obtaining a base matrix;
means for selecting at least one different combination of scalars, each combination including at least one scalar for at least one row of the base matrix, one scalar per row, each scalar being a real or complex value; and
means for forming at least one steering matrix by multiplying the base matrix with the at least one different combination of scalars, wherein one steering matrix is formed by each combination of scalars.

14. The apparatus of claim 13, wherein the base matrix is a Walsh matrix.

15. The apparatus of claim 13, wherein each of the at least one steering matrix has orthogonal columns.

16. The apparatus of claim 13, wherein each element of the at least one steering matrix belongs in a set comprising +1, -1, +$j$, and-$j$, where $j$ is a square root of - 1.

17. A method of performing spatial processing at a transmitting entity for data transmission in a wireless multi-antenna communication system, comprising:

processing data to obtain a block of data symbols to be transmitted in a plurality of transmission spans;
obtaining a plurality of steering matrices, one steering matrix for each of the plurality of transmission spans, wherein the plurality of steering matrices are generated based on a base matrix and at least one different combination of scalars, each combination including at least one scalar used to multiply at least one row of the base matrix to generate a corresponding steering matrix;
performing spatial processing on at least one data symbol to be transmitted in each transmission span with the steering matrix obtained for the transmission span, the spatial processing resulting in the block of data symbols observing a plurality of effective channels formed with the plurality of steering matrices; and
transmitting the block of data symbols in the plurality of transmission spans.

18. The method of claim 17 or 28, wherein the multi-antenna communication system utilizes orthogonal frequency division multiplexing (OFDM), and wherein the plurality of transmission spans correspond to a plurality of subbands.

19. The method of claim 17, wherein the multi-antenna communication system utilizes orthogonal frequency division multiplexing (OFDM), and wherein each of the plurality of transmission spans corresponds to one or more subbands in one time interval.

20. The method of claim 17 or 28, wherein the plurality of transmission spans correspond to a plurality of time intervals.

21. The method of claim 17 or 28, wherein each steering matrix has one column, and wherein one data symbol is transmitted in each transmission span.

22. The method of claim 17, wherein each steering matrix has multiple columns, and wherein multiple data symbols are transmitted simultaneously in each transmission span.

23. The method of claim 17, wherein the plurality of steering matrices are unknown to a receiving entity for the block of data symbols.

24. The method of claim 17, wherein the plurality of steering matrices are known only to the transmitting entity and a receiving entity for the block of data symbols.

25. An apparatus at a transmitting entity in a wireless multi-antenna communication system, comprising:

means for processing data to obtain a block of data symbols to be transmitted in a plurality of transmission spans; means for obtaining a plurality of steering matrices, one steering matrix for each of the plurality of transmission spans, wherein the plurality of steering matrices are generated based on a base matrix and at least one different combination of scalars, each combination including at least one scalar used to multiply at least one row of the base matrix to generate a corresponding steering matrix; and means for performing spatial processing on at least one data symbol to be transmitted in each transmission span with the steering matrix obtained for the transmission span, the spatial processing resulting in the block of data symbols observing a plurality of effective channels formed with the plurality of steering matrices; and means for transmitting the block of data symbols in the plurality of transmission spans.

26. The apparatus of claim 25, wherein each steering matrix has one column, and wherein one data symbol is transmitted in each transmission span.

27. The apparatus of claim 25, wherein each steering matrix has multiple columns, and wherein multiple data symbols are transmitted simultaneously in each transmission span.

28. A method of performing receiver spatial processing at a receiving entity in a wireless multi-antenna communication system, comprising:

deriving a plurality of spatial filter matrices based on a channel response estimate and a plurality of steering matrices, one steering matrix for each of a plurality of transmission spans, wherein the plurality of steering matrices are generated based on a base matrix and at least one different combination of scalars, each combination including at least one scalar used to multiply at least one row of the base matrix to generate a corresponding steering matrix; obtaining, in the plurality of transmission spans, R sequences of received symbols via R receive antennas, where R is an integer one or greater; and performing receiver spatial processing on the R sequences of received symbols with the plurality of spatial filter matrices to obtain detected symbols.

29. The method of claim 28, wherein each steering matrix has N columns, and wherein each spatial filter matrix has a dimension of N by R, where N and R are integers greater than two.

30. An apparatus at a receiving entity in a wireless multi-antenna communication system, comprising:

means for deriving a plurality of spatial filter matrices based on a channel response estimate and a plurality of steering matrices, one steering matrix for each of a plurality of transmission spans, wherein the plurality of steering matrices are generated based on a base matrix and at least one different combination of scalars, each combination including at least one scalar used to multiply at least one row of the base matrix to generate the corresponding steering matrix; means for obtaining, in the plurality of transmission spans, R sequences of received symbols via R receive antennas, where R is an integer one or greater, and means for performing receiver spatial processing on the R sequences of received symbols with the plurality of spatial filter matrices to obtain detected symbols.

31. The apparatus of claim 30, wherein each steering matrix has one column, and wherein each spatial filter matrix has a dimension of one by one.

32. The apparatus of claim 30, wherein each steering matrix has N columns, and wherein each spatial filter matrix has a dimension of N by R, where N and R are integers greater than two.

**Patentansprüche**

1. Verfahren zum Erzeugen von Lenkungsmatrizen, welche verwendet werden zur räumlichen Verarbeitung in einem drahtlosen Multiantennen-Kommunikationssystem aufweisend:

   Erhalten (212) einer Basismatrix;
   Auswählen (214) zumindest einer unterschiedlichen Kombination von Skalaren, jede Kombination umfassend zumindest einen Skalar für zumindest eine Zeile der Basismatrix, einen Skalar pro Zeile, wobei jeder Skalar ein reeller oder komplexer Wert ist; und
   Bilden (216) zumindest einer Lenkungsmatrix durch Multiplizieren der Basismatrix mit der zumindest einen unterschiedlichen Kombination von Skalaren, wobei eine Lenkungsmatrix durch jede Kombination von Skalaren gebildet wird.

2. Verfahren nach Anspruch 1, weiterhin aufweisend:

   Bilden (220) einer Vielzahl von Lenkungsvektoren mit Spalten der zumindest einen Lenkungsmatrix.

3. Verfahren nach Anspruch 1 oder 17, wobei die Basismatrix eine Walsh-Matrix ist.

4. Verfahren nach Anspruch 1 oder 17, wobei die Basismatrix eine Fourier-Matrix ist.

5. Verfahren nach Anspruch 1, wobei die Basismatrix eine unitäre Matrix ist, welche orthogonale Spalten aufweist.

6. Verfahren nach Anspruch 1 oder 17, wobei jede Lenkungsmatrix orthogonale Spalten aufweist.

7. Verfahren nach Anspruch 1, wobei die Skalare für die zumindest eine unterschiedliche Kombination ausgewählt werden aus einem Satz, welcher aufweist +1, -1, +$j$ und -$j$, wobei $j$ eine Quadratwurzel von -1 ist.

8. Verfahren nach Anspruch 1 oder 17, wobei jedes Element der zumindest einen Lenkungsmatrix in einen Satz gehört, welcher +1, -1, +$j$ und -$j$ aufweist, wobei $j$ eine Quadratwurzel von -1 ist.

9. Verfahren nach Anspruch 1 oder 17, wobei jede Lenkungsmatrix Elemente umfasst, welche den gleichen Betrag aufweisen.

10. Verfahren nach Anspruch 1, wobei die Basismatrix eine Dimension von N mal N hat, wobei N eine ganze Zahl größer als 1 ist und wobei jede Kombination N-1 Skalare für N-1 Zeilen der Basismatrix umfasst.

11. Verfahren nach Anspruch 10, wobei N eine Zweierpotenz ist.

12. Verfahren nach Anspruch 1, wobei die zumindest eine Kombination von Skalaren erhalten wird mit einem Basis-K-Zähler, welcher eine Zahl für jeden der zumindest einen Skalare in einer Kombination aufweist, wobei K die Anzahl von unterschiedlichen möglichen Skalaren ist, welche für jede Zeile der Basismatrix verwendbar sind.

13. Vorrichtung (340; 380) betriebsfähig zum Erzeugen von Lenkungsmatrizen, welche verwendet werden zur räumlichen Verarbeitung in einem drahtlosen Multiantennen-Kommunikationssystem aufweisend:

   Mittel zum Erhalten einer Basismatrix;
   Mittel zum Auswählen zumindest einer unterschiedlichen Kombination von Skalaren, jede Kombination umfassend zumindest einen Skalar für zumindest eine Zeile der Basismatrix, einen Skalar pro Zeile, wobei jedes Skalar ein reeller oder komplexer Wert ist; und
   Mittel zum Bilden zumindest einer Lenkungsmatrix durch Multiplizieren der Basismatrix mit der zumindest einen unterschiedlichen Kombination von Skalaren, wobei eine Lenkungsmatrix durch jede Kombination von Skalaren gebildet wird.

14. Vorrichtung nach Anspruch 13, wobei die Basismatrix eine Walsh-Matrix ist.

15. Vorrichtung nach Anspruch 13, wobei jede der zumindest einen Lenkungsmatrix orthogonale Spalten aufweist.

**16.** Vorrichtung nach Anspruch 13, wobei jedes Element der zumindest einen Lenkungsmatrix in einen Satz gehört, welcher +1, -1, +j und j aufweist, wobei j eine Quadratwurzel von -1 ist.

**17.** Verfahren zum Ausführen von räumlicher Verarbeitung bei einer übertragenden Einheit für Datenübertragung in einem drahtlosen Multiantennen-Kommunikationssystem aufweisend:

Verarbeiten von Daten zum Erhalten eines Blocks von Datensymbolen, welche in einer Vielzahl von Übertragungszeitspannen zu übertragen sind;

Erhalten einer Vielzahl von Lenkungsmatrizen, eine Lenkungsmatrix für jede der Vielzahl von Übertragungszeitspannen, wobei die Vielzahl von Lenkungsmatrizen erzeugt wird basierend auf einer Basismatrix und zumindest einer unterschiedlichen Kombination von Skalaren, wobei jede Kombination zumindest einen Skalar umfasst, welcher verwendet wird zum Multiplizieren zumindest einer Zeile der Basismatrix, um eine entsprechende Lenkungsmatrix zu erzeugen;

Ausführen von räumlicher Verarbeitung auf zumindest einem Datensymbol, welches zu übertragen ist, in jeder Übertragungszeitspanne mit der Lenkungsmatrix, welche für die Übertragungszeitspanne erhalten wurde, wobei die räumliche Verarbeitung in dem Block von Datensymbolen resultiert, unter Berücksichtigung einer Vielzahl von effektiven Kanälen, welche mit der Vielzahl von Lenkungsmatrizen gebildet werden; und

Übertragen des Blocks von Datensymbolen in der Vielzahl von Übertragungszeitspannen.

**18.** Verfahren nach Anspruch 17 oder 28, wobei das Multiantennen-Kommunikationssystem Orthogonal Frequency Division Multiplexing (OFDM) verwendet, und wobei die Vielzahl von Übertragungszeitspannen einer Vielzahl von Subbändern entspricht.

**19.** Verfahren nach Anspruch 17, wobei das Multiantennen-Kommunikationssystem Orthogonal Frequency Division Multiplexing (OFDM) verwendet, und wobei jede der Vielzahl von Übertragungszeitspannen einem oder mehreren Subbändern in einem Zeitintervall entspricht.

**20.** Verfahren nach Anspruch 17 oder 28, wobei die Vielzahl von Übertragungszeitspannen einer Vielzahl von Zeitintervallen entspricht.

**21.** Verfahren nach Anspruch 17 oder 28, wobei jede Lenkungsmatrix eine Spalte aufweist, und wobei ein Datensymbol in jeder Übertragungszeitspanne übertragen wird.

**22.** Verfahren nach Anspruch 17, wobei jede Lenkungsmatrix mehrere Spalten aufweist und wobei mehrere Datensymbole gleichzeitig in jeder Übertragungszeitspanne übertragen werden.

**23.** Verfahren nach Anspruch 17, wobei die Vielzahl von Lenkungsmatrizen für eine empfangende Einheit für den Block von Datensymbolen unbekannt ist.

**24.** Verfahren nach Anspruch 17, wobei die Vielzahl von Lenkungsmatrizen nur der übertragenden Einheit und einer empfangenden Einheit für den Block von Datensymbolen bekannt ist.

**25.** Vorrichtung bei einer übertragenden Einheit in einem drahtlosen Multiantennen-Kommunikationssystem aufweisend:

Mittel zum Verarbeiten von Daten zum Erhalten eines Blocks von Datensymbolen, welche in einer Vielzahl von Übertragungszeitspannen zu übertragen sind;

Mittel zum Erhalten einer Vielzahl von Lenkungsmatrizen, eine Lenkungsmatrix für jede der Vielzahl von Übertragungszeitspannen, wobei die Vielzahl von Lenkungsmatrizen erzeugt wird basierend auf einer Basismatrix und zumindest einer unterschiedlichen Kombination von Skalaren, wobei jede Kombination zumindest einen Skalar umfasst, welcher verwendet wird zum Multiplizieren zumindest einer Zeile der Basismatrix, um eine entsprechende Lenkungsmatrix zu erzeugen; und

Mittel zum Ausführen von räumlicher Verarbeitung auf zumindest einem Datensymbol, welches zu übertragen ist, in jeder Übertragungszeitspanne mit der Lenkungsmatrix, welche für die Übertragungszeitspanne erhalten wurde, wobei die räumliche Verarbeitung in dem Block von Datensymbolen resultiert, unter Berücksichtigung einer Vielzahl von effektiven Kanälen, welche mit der Vielzahl von Lenkungsmatrizen gebildet werden; und

Mittel zum Übertragen des Blocks von Datensymbolen in der Vielzahl von Übertragungszeitspannen.

**26.** Vorrichtung nach Anspruch 25, wobei jede Lenkungsmatrix eine Spalte aufweist, und wobei ein Datensymbol in jeder Übertragungszeitspanne übertragen wird.

**27.** Vorrichtung nach Anspruch 25, wobei jede Lenkungsmatrix mehrere Spalten aufweist und wobei mehrere Datensymbole gleichzeitig in jeder Übertragungszeitspanne übertragen werden.

**28.** Verfahren zum Ausführen räumlicher Verarbeitung bei einer empfangenden Einheit in einem drahtlosen Multiantennen-Kommunikationssystem aufweisend:

Herleiten einer Vielzahl von räumlichen Filtermatrizen basierend auf einer Kanalantwortabschätzung und einer Vielzahl von Lenkungsmatrizen, eine Lenkungsmatrix für jede einer Vielzahl von Übertragungszeitspannen, wobei die Vielzahl von Lenkungsmatrizen erzeugt wird basierend auf einer Basismatrix und zumindest einer unterschiedlichen Kombination von Skalaren, wobei jede Kombination zumindest einen Skalar umfasst, welcher verwendet wird zum Multiplizieren zumindest einer Zeile der Basismatrix, um eine entsprechende Lenkungsmatrix zu erzeugen;
Erhalten, in der Vielzahl von Übertragungszeitspannen, von R Sequenzen von empfangenen Symbolen über R Empfangsantennen, wobei R eine ganze Zahl von 1 oder größer ist; und
Ausführen von räumlicher Verarbeitung beim Empfänger auf den R Sequenzen von empfangenen Symbolen mit der Vielzahl von räumlichen Filtermatrizen, um detektierte Symbole zu erhalten.

**29.** Verfahren nach Anspruch 28, wobei jede Lenkungsmatrix N Spalten aufweist, und wobei jede räumliche Filtermatrix eine Dimension von N mal R hat, wobei N und R ganze Zahlen größer als zwei sind.

**30.** Vorrichtung bei einer empfangenden Einheit in einem drahtlosen Multiantennen-Kommunikationssystem aufweisend:

Mittel zum Herleiten einer Vielzahl von räumlichen Filtermatrizen basierend auf einer Kanalantwortabschätzung und einer Vielzahl von Lenkungsmatrizen, eine Lenkungsmatrix für jede einer Vielzahl von Übertragungszeitspannen, wobei die Vielzahl von Lenkungsmatrizen erzeugt wird basierend auf einer Basismatrix und zumindest einer unterschiedlichen Kombination von Skalaren, wobei jede Kombination zumindest einen Skalar umfasst, welcher verwendet wird zum Multiplizieren zumindest einer Zeile der Basismatrix, um eine entsprechende Lenkungsmatrix zu erzeugen;
Mittel zum Erhalten, in der Vielzahl von Übertragungszeitspannen, von R Sequenzen von empfangenen Symbolen über R Empfangsantennen, wobei R eine ganze Zahl von 1 oder größer ist; und
Mittel zum Ausführen von räumlicher Verarbeitung beim Empfänger auf den R Sequenzen von empfangenen Symbolen mit der Vielzahl von räumlichen Filtermatrizen, um detektierte Symbole zu erhalten.

**31.** Vorrichtung nach Anspruch 30, wobei jede Lenkungsmatrix 1 Spalte aufweist, und wobei jede räumliche Filtermatrix eine Dimension von 1 mal 1 hat.

**32.** Vorrichtung nach Anspruch 30, wobei jede Lenkungsmatrix N Spalten aufweist, und wobei jede räumliche Filtermatrix eine Dimension von N mal R hat, wobei N und R ganze Zahlen größer als zwei sind.

**Revendications**

**1.** Un procédé de génération de matrices directrices utilisées pour le traitement spatial dans un système de communication sans fil à antennes multiples, comprenant :

l'obtention (212) d'une matrice de base ;
la sélection (214) d'au moins une combinaison différente de scalaires, chaque combinaison comprenant au moins un scalaire pour au moins une ligne de la matrice de base, avec un scalaire par ligne, chaque scalaire étant une valeur réelle ou complexe ; et
la formation (216) d'au moins une matrice directrice par multiplication de la matrice de base par la au moins une combinaison différente de scalaires, une matrice directrice étant formée par chaque combinaison de scalaires.

**2.** Le procédé de la revendication 1, comprenant en outre :

la formation (220) d'une pluralité de vecteurs directeurs avec des colonnes de la au moins une matrice directrice.

3. Le procédé de la revendication 1 ou 17, dans lequel la matrice de base est une matrice de Walsh.

4. Le procédé de la revendication 1 ou 17, dans lequel la matrice de base est une matrice de Fourier.

5. Le procédé de la revendication 1, dans lequel la matrice de base est une matrice unitaire avec des colonnes orthogonales.

6. Le procédé de la revendication 1 ou 17, dans lequel chaque matrice directrice possède des colonnes orthogonales.

7. Le procédé de la revendication 1, dans lequel les scalaires pour la au moins une combinaison différente sont choisis dans un ensemble comprenant +1, -1, +$j$ et -$j$, $j$ étant une racine carrée de -1.

8. Le procédé de la revendication 1 ou 17, dans lequel chaque élément de la au moins une matrice directrice appartient à un ensemble comprenant +1, -1, +$j$ et -$j$, $j$ étant une racine carrée de -1.

9. Le procédé de la revendication 1 ou 17, dans lequel chaque matrice directrice inclut des éléments d'égale grandeur.

10. Le procédé de la revendication 1, dans lequel la matrice de base a une dimension de N par N, N étant un entier supérieur à l'unité, et chaque combinaison comprenant N-1 scalaires pour N-1 lignes de la matrice de base.

11. Le procédé de la revendication 10, dans lequel N est une puissance de deux.

12. Le procédé de la revendication 1, dans lequel la au moins une combinaison de scalaires est obtenue avec un compteur à base K ayant un chiffre pour chacun des au moins un scalaire dans une combinaison, K étant le nombre de scalaires possibles différents utilisables pour chaque ligne de la matrice de base.

13. Un dispositif (340 ; 380) pouvant être mis en oeuvre pour générer des matrices directrices utilisées pour le traitement spatial dans un système de communication sans fil à antennes multiples, comprenant :

   des moyens d'obtention (212) d'une matrice de base ;
   des moyens de sélection (214) d'au moins une combinaison différente de scalaires, chaque combinaison comprenant au moins un scalaire pour au moins une ligne de la matrice de base, avec un scalaire par ligne, chaque scalaire étant une valeur réelle ou complexe ; et
   des moyens de formation (216) d'au moins une matrice directrice par multiplication de la matrice de base par la au moins une combinaison différente de scalaires, une matrice directrice étant formée par chaque combinaison de scalaires.

14. Le dispositif de la revendication 13, dans lequel la matrice de base est une matrice de Walsh.

15. Le dispositif de la revendication 13, dans lequel chacune des au moins une matrice directrice possède des colonnes orthogonales.

16. Le dispositif de la revendication 13, dans lequel chaque élément de la au moins une matrice directrice appartient à un ensemble comprenant +1, -1, +$j$ et -$j$, $j$ étant une racine carrée de -1.

17. Un procédé pour exécuter un traitement spatial dans une entité émettrice pour l'émission de données dans un système de communication sans fil à antennes multiples, comprenant :

   le traitement de données pour obtenir un bloc de symboles de données à émettre dans une pluralité de fenêtres d'émission ;
   l'obtention d'une pluralité de matrices directrices, avec une matrice directrice pour chacune de la pluralité de fenêtres d'émission, la pluralité de matrices directrices étant générée sur la base d'une matrice de base et d'au moins une combinaison différente de scalaires, chaque combinaison comprenant au moins un scalaire utilisé pour multiplier au moins une ligne de la matrice de base pour générer une matrice directrice correspondante ;
   l'exécution d'un traitement spatial sur au moins un symbole de données à émettre dans chaque fenêtre d'émission avec la matrice directrice obtenue pour la fenêtre d'émission, le traitement spatial donnant comme résultat que le bloc de symboles de données se conforme à une pluralité de canaux effectifs formés avec la pluralité de matrices directrices ; et

l'émission du bloc de symboles de données dans la pluralité de fenêtres d'émission.

18. Le procédé de la revendication 17 ou 28, dans lequel le système de communication à antennes multiples utilise un multiplexage par répartition en fréquences orthogonales (OFDM), et dans lequel la pluralité de fenêtres d'émission correspondent à une pluralité de sous-bandes.

19. Le procédé de la revendication 17, dans lequel le système de communication à antennes multiples utilise un multiplexage par répartition en fréquences orthogonales OFDM, et dans lequel chacune de la pluralité de fenêtres d'émission correspond à une ou plusieurs sous-bandes dans un intervalle temporel.

20. Le procédé de la revendication 17 ou 28, dans lequel la pluralité de fenêtres d'émission correspond à une pluralité d'intervalles temporels.

21. Le procédé de la revendication 17 ou 28, dans lequel chaque matrice directrice possède une colonne, et dans lequel un symbole de données est émis dans chaque fenêtre d'émission.

22. Le procédé de la revendication 17, dans lequel chaque matrice directrice possède des colonnes multiples, et dans lequel des symboles de données multiples sont émis simultanément dans chaque fenêtre d'émission.

23. Le procédé de la revendication 17, dans lequel la pluralité de matrices directrices est inconnue d'une entité réceptrice pour le bloc de symboles de données.

24. Le procédé de la revendication 17, dans lequel la pluralité de matrices directrices n'est connue que de l'entité émettrice et d'une entité réceptrice pour le bloc de symboles de données.

25. Un dispositif dans une entité émettrice d'un système de communication sans fil à antennes multiples, comprenant :

des moyens de traitement de données pour obtenir un bloc de symboles de données à émettre dans une pluralité de fenêtres d'émission ;

des moyens d'obtention d'une pluralité de matrices directrices, avec une matrice directrice pour chacune de la pluralité de fenêtres d'émission, la pluralité de matrices directrices étant générée sur la base d'une matrice de base et d'au moins une combinaison différente de scalaires, chaque combinaison comprenant au moins un scalaire utilisé pour multiplier au moins une ligne de la matrice de base pour générer une matrice directrice correspondante ;

des moyens d'exécution d'un traitement spatial sur au moins un symbole de données à émettre dans chaque fenêtre d'émission avec la matrice directrice obtenue pour la fenêtre d'émission, le traitement spatial donnant comme résultat que le bloc de symboles de données se conforme à une pluralité de canaux effectifs formés avec la pluralité de matrices directrices ; et

des moyens d'émission du bloc de symboles de données dans la pluralité de fenêtres d'émission.

26. Le dispositif de la revendication 25, dans lequel chaque matrice directrice possède une colonne, et dans lequel un symbole de données est émis dans chaque fenêtre d'émission.

27. Le dispositif de la revendication 25, dans lequel chaque matrice directrice possède des colonnes multiples, et dans lequel des symboles de données multiples sont émis simultanément dans chaque fenêtre d'émission.

28. Un procédé d'exécution d'un traitement spatial de récepteur dans une entité réceptrice d'un système de communication sans fil à antennes multiples, comprenant :

la dérivation d'une pluralité de matrices de filtrage spatial sur la base d'une estimée de réponse de canal et d'une pluralité de matrices directrices, avec une matrice directrice pour chacune d'une pluralité de fenêtres d'émission, la pluralité de matrices directrices étant générée sur la base d'une matrice de base et d'au moins une combinaison différente de scalaires, chaque combinaison comprenant au moins un scalaire utilisé pour multiplier au moins une ligne de la matrice de base pour générer une matrice directrice correspondante ;

l'obtention, dans la pluralité de fenêtres d'émission, de R séquences de symboles reçus via R antennes réceptrices, R étant un entier égal ou supérieur à l'unité ; et

l'exécution d'un traitement spatial de récepteur sur les R séquences de symboles reçus avec la pluralité de matrices de filtrage spatial pour obtenir des symboles détectés.

29. Le procédé de la revendication 28, dans lequel chaque matrice directrice possède N colonnes, et dans lequel chaque matrice de filtrage spatial est de dimension N par R, N et R étant des entiers supérieurs à deux.

30. Un dispositif dans une entité réceptrice d'un système de communication à antennes multiples sans fil, comprenant :

des moyens de dérivation d'une pluralité de matrices de filtrage spatial sur la base d'une estimée de réponse de canal et d'une pluralité de matrices directrices, avec une matrice directrice pour chacune d'une pluralité de fenêtres d'émission, la pluralité de matrices directrices étant générée sur la base d'une matrice de base et d'au moins une combinaison différente de scalaires, chaque combinaison comprenant au moins un scalaire utilisé pour multiplier au moins une ligne de la matrice de base pour générer une matrice directrice correspondante ; des moyens d'obtention, dans la pluralité de fenêtres d'émission, de R séquences de symboles reçus via R antennes réceptrices, R étant un entier égal ou supérieur à l'unité ; et des moyens d'exécution d'un traitement spatial de récepteur sur les R séquences de symboles reçus avec la pluralité de matrices de filtrage spatial pour obtenir des symboles détectés.

31. Le dispositif de la revendication 30, dans lequel chaque matrice directrice possède une colonne, et dans lequel chaque matrice de filtrage spatial est de dimension un par un.

32. Le dispositif de la revendication 30, dans lequel chaque matrice directrice possède N colonnes, et dans lequel chaque matrice de filtrage spatial est de dimension N par R, N et R étant des entiers supérieurs à deux.

**FIG. 1**

EP 1 733 486 B1

*200*

```
                    ┌──────────────────────────┐
                    │          Start           │
                    └──────────────────────────┘
                                  │
                                  ▼        ╭212
                    ┌──────────────────────────┐
                    │    Obtain a base matrix   │
                    │ (e.g., a Walsh matrix, a DFT │
                    │ matrix, or a unitary matrix) │
                    └──────────────────────────┘
                                  │
                                  ▼        ╭214
                    ┌──────────────────────────┐
        ┌──────────▶│ Select a different combination │
        │           │    of scalars to use for  │
        │           │    a new steering matrix  │
        │           └──────────────────────────┘
        │                         │
        │                         ▼        ╭216
        │           ┌──────────────────────────┐
        │           │  Form the steering matrix by │
        │           │   multiplying the rows of the │
        │           │ base matrix with the selected │
        │           │   combination of scalars  │
        │           └──────────────────────────┘
        │                         │
        │                         ▼
        │                    ╱────────────╲   ╭218
        │        YES       ╱    Another     ╲
        └────────────────◁  steering matrix  ▷
                           ╲    needed?     ╱
                            ╲────────────╱
                                  │ NO
                                  ▼        ╭220
                    ┌──────────────────────────┐
                    │ Form a set of steering vectors (if │
                    │ needed for MISO transmission) │
                    │   from the steering matrices │
                    └──────────────────────────┘
                                  │
                                  ▼
                    ┌──────────────────────────┐
                    │           End            │
                    └──────────────────────────┘
```

**FIG. 2**

**Single-Antenna Receiving Entity** *350x*

**Multi-Antenna Transmitting Entity**

*310*

*320* TX Data Processor

*330* TX Spatial Processor

*332a* TMTR 1

*334a*

*332t* TMTR $N_T$

*334t*

*342* Memory — SV & SM *344*

*340* Controller

$\underline{V}(m)$ $\underline{v}(m)$

*352x*

*354x* RCVR

*360x* Detector

*370x* RX Data Processor

$\hat{h}_{eff}(m)$

*380x* Controller — Channel Estimator

*384x*

*382x* Memory — SV *386x*

**Multi-Antenna Receiving Entity** *350y*

*352a*

*354a* RCVR 1

*352r*

*354r* RCVR $N_R$

*360y* RX Spatial Processor

*370y* RX Data Processor

$\underline{M}(m)$

*380y* Controller — Channel Estimator

*384y*

*382y* Memory — SM *386y*

**FIG. 3**

EP 1 733 486 B1

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030016637 A